# EUROPEAN PATENT SPECIFICATION

(11) **EP 1 129 584 B1**
(45) Date of publication and mention of the grant of the patent: **27.02.2008**
(21) Application number: 99968335.2
(22) Date of filing: 09.11.1999
(51) Int. Cl.: H04Q 3/00, H04L 12/66

(54) **SECURITY IN TELECOMMUNICATIONS NETWORK GATEWAYS**
SICHERHEIT IN TELEKOMMUNIKATIONSNETZÜBERGANGSEINRICHTUNGEN
SECURITE DANS LES PASSERELLES DE RESEAUX DE TELECOMMUNICATION

(30) Priority: 10.11.1998 FI 982443
(43) Date of publication of application: 05.09.2001
(73) Proprietor: TELEFONAKTIEBOLAGET LM ERICSSON (publ), 164 83 Stockholm (SE)
(72) Inventor: GRAF, Leslie, Ballwyn, VIC 3103 (AU); RYTINA, Ian, Carlton, VIC (AU); HOLLIS, Mark, Park Orchads, VIC (AU)
(74) Representative: Meyer, Jochen
(86) International application number: PCT/EP1999/008591
(87) International publication number: WO 2000/030369

(56) References cited:
- EP-A- 0 203 614
- EP-A- 0 851 653
- EP-A- 0 909 064
- EP-A- 0 966 145
- WO-A-96/38018
- WO-A-98/17048
- WO-A-98/28885
- WO-A-99/34613
- WO-A-99/67928

## Description

### Field of the Invention

The present invention relates to security in telecommunications networks and in particular to a method and apparatus for preventing one Internet Access Provider from interfering with telephone circuits allocated to another Internet Access Provider by a common telecommunications network operator.

### Background to the Invention

At the present time, in order to access the Internet, a user typically has to make a connection (possibly via a modem) to a local telephone exchange of a telecom operator. The exchange then sets-up a circuit switched connection between the user and an input device of an Internet Service Provider (ISP) identified by a telephone number (B-number) dialled by the user. In some cases, the connection may be routed via one or more intermediate exchanges. In either case, the telephone network treats the connection as it would any normal telephone-to-telephone connection, i.e. it is not aware that the connection serves as an Internet access connection.

The European Telecommunications Standards Institute (ETSI) has recently established a project under the acronym TIPHON (Telecommunications and Internet Protocol Harmonisation Over Networks) to support the market for voice communication and related voiceband communication (e.g. facsimile) between users connected to both circuit switched networks and IP based networks. As part of TIPHON, it has been proposed to more closely integrate the ISPs into the telecommunications networks and in particular to provide for the exchange of signalling information between ISPs and the exchanges of telecommunications networks, for the purpose of setting up and managing the circuit switched connections between exchanges and the input devices of the ISPs.

The current TIPHON proposal provides for a signalling gateway which acts as the interface between the signalling network of the telecom operator and the ISP. It is expected that the signalling network of the telecom operator will typically be a Signalling System No.7 (SS7) network which carries messages of the ISDN User Part (ISUP) protocol, whilst communications between the signalling gateway and the ISP are expected to be carried over an IP network. One of the roles of the signalling gateway is therefore to seamlessly relay ISUP messages from the Time Division Multiple Access (TDMA) SS7 network to the ISP over the packet switched IP network, and *vice versa.* The signalling gateway is generally referred to as an SS7/IP gateway.

It is likely that the SS7/IP gateways will be under the control of the telecom network operator, and that a single gateway may provide a signalling interface to the telecom network for a plurality of independently operated ISPs.

### Summary of the Present Invention

The inventors of the present invention have discovered that under the current TIPHON proposals it is possible for an ISP connected to an SS7/IP gateway to interfere with the control of another ISP, and in particular with circuits allocated to that other ISP, connected to the same SS7/IP gateway.

It is therefore an object of the present invention to overcome or at least mitigate this problem of fraudulent (or accidental) cross-ISP interference.

This and other objects are achieved by including functionality in the SS7/IP gateway for authenticating signalling messages received from ISPs connected thereto on the basis of the message content and the origins of the messages.

According to a first aspect of the present invention there is provided a method of transferring signalling messages between an Internet Service Provider (ISP) and an exchange of a telecommunications network for the purpose of allocating and controlling circuit switched communication channels between the exchange and the ISP, the method comprising:
routing said signalling messages via a signalling gateway which provides for conversion of messages between a first transmission protocol used in the telecommunications network and a second transmission protocol used in the network which connects the signalling gateway to the ISP; and
for each message received at the signalling gateway from the ISP, confirming the right of that ISP to control a circuit switched communication channel identified in the message.

By authenticating signalling messages received at the signalling gateway from the ISP, the signalling gateway is able to prevent fraudulent messages from being passed from the ISP to the exchange which might otherwise interfere with those circuits allocated by the exchange to another ISP.

Preferably, a record is maintained at the signalling gateway, of the circuit switched communication channels allocated to each ISP coupled to the signalling gateway.

Preferably, the telecommunication network comprises a Signalling System No.7 (SS7) based signalling network which is interfaced to the ISP via the signalling gateway. More preferably, the network coupling the signalling gateway to the ISP is an IP based network, such that the signalling gateway provides a conversion between at least the Message Transfer Part protocols (i.e. said first transmission protocol) of the SS7 network and the IP based protocols. This arrangement allows ISUP messages to be transferred, transparently, between the exchange and the ISP.

In certain embodiments of the invention, the ISP from which a signalling message originates is identified at the signalling gateway by virtue of the source IP address associated with the IP datagram in which the message is delivered to the gateway. Typically, each ISP coupled to the signalling gateway is allocated a unique IP address. The signalling gateway maintains a record of those circuits which are allocated to a given ISP/IP address.

In other embodiments of the invention, each of the ISPs connected to a given signalling gateway is allocated a unique Point Code in the signalling network of the telecommunications network, Point Codes being included in the header of a signalling message to indicate the destination and source of the message. The signalling gateway screens messages received from an ISP to confirm that the source Point Codes contained therein correspond to the actual ISPs from which they originated. Again, the originating ISP for a message may be identified on the basis of the source IP address of the message containing datagram.

In other embodiments of the invention, the ISP from which a signalling message originates is identified by virtue of the input port/device of the signalling gateway at which the message. Thus input port/device identity may be used as an alternative to the source ISP IP address.

According to a second aspect of the present invention there is provided apparatus for transferring signalling messages between an Internet Service Provider (ISP) and an exchange of a telecommunications network for the purpose of allocating and controlling circuit switched communication channels between the exchange and the ISP, the apparatus comprising a signalling gateway coupled between a signalling network of a telecommunications network and a network connected to an Internet Service Provider (ISP) and arranged to:
convert messages between a first transmission protocol used in the telecommunications network and a second transmission protocol used in the network which connects the signalling gateway to the ISP; and
for each message received at the signalling gateway from the ISP, to confirm the right of that ISP to control a circuit switched communication channel identified in the message.

### Brief Description of the Drawings

For a better understanding of the present invention and in order to show how the same may be carried into effect reference will now be made, by way of example, to the accompanying drawings, in which:
Figure 1 shows a signalling gateway coupling a signalling network of a telecommunications network to a number of ISPs;
Figure 2 illustrates schematically the protocol stacks implemented at the signalling gateway of Figure 1; and
Figure 3 is a flow diagram illustrating the method of operation of the signalling gateway of the network of Figure 1.

### Detailed Description of Certain Embodiments

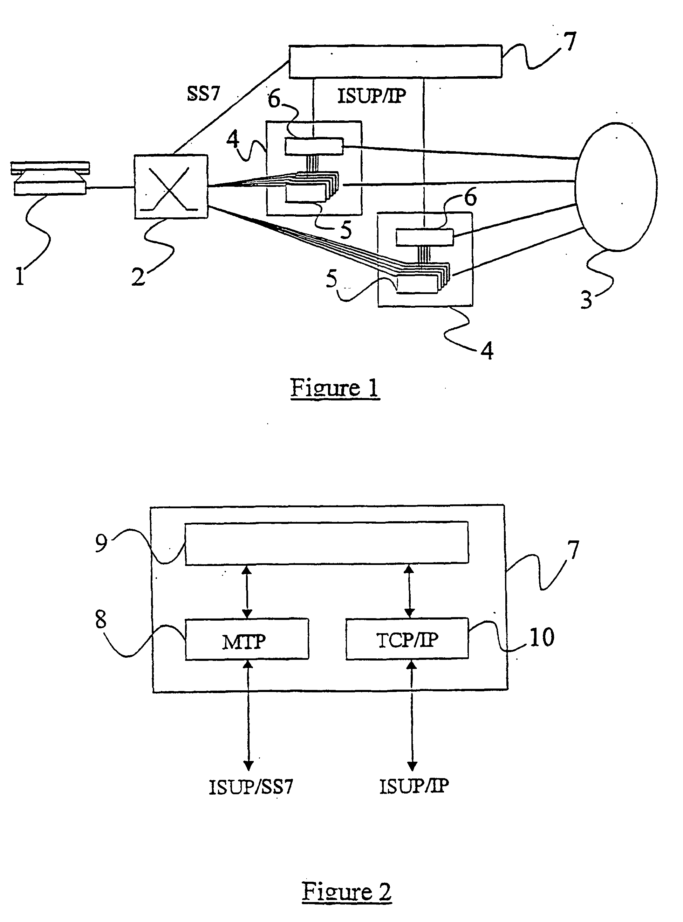

In Figure 1 there is illustrated a subscriber telephone 1 connected to a local access exchange 2 of a telephone network. This network is assumed to be a conventional network employing PSTN, ISDN, or certain other known communication protocols. Within the network, circuit switched channels over which voice or data may be transmitted are set up and controlled using a Signalling System No.7 based signalling network (e.g. CCITT No.7). More particularly, inter-exchange signalling messages carried by the SS7 network conform to the ISDN User Part (ISUP) protocol.

The present example is concerned with the setting-up and control of a voice communication channel between the telephone network subscriber terminal 1 and a remote terminal (not shown in Figure 1) coupled to the Internet 3. The remote terminal may be for example a multi-media PC connected via a modem and a local access network to the Internet 3, or it may be a telephone network subscriber telephone similar to the telephone 1. In either case, voice data is communicated between the two terminals/telephones over the Internet 3.

A number of ISPs 4 are each allocated a large number of circuit switched channels by the access exchange 2, and each of these channels has an identification number (CIC) unique to the exchange 2. In order to access the Internet, it is necessary to establish a connection over one of the allocated channels between the subscriber telephone 1 and an Internet interface device 5 (via the access exchange 2) provided by one of the ISPs 4.

The interface device 5 is known in the art as a "Media

Gateway" and is arranged to convert voice information received from the telephone 1 into a form suitable for transmission over the Internet (involving for example transcoding, formatting, etc) and to perform the reverse transformation for data received over the Internet and destined for the telephone 1. It is noted that the Media Gateway 5 may communicate with a remote Media Gateway, or with a remote IP terminal, using the ITU multi-media protocol H.323 although this will not be considered here in further detail.

Each ISP 4 has a "Media Controller" 6 which is analogous to a conventional telecommunications network switch, i.e. it is responsible for the general management of Media Gateway resources and in particular for allocating Media Gateways to subscribers (or rather to circuits originating at the access exchange 2).

The Media Controller 6 is arranged to exchange signalling information with a signalling gateway 7, referred to hereinafter as an SS7/IP gateway, which is under the control of the telecommunications network operator and can thus be considered secure from the point of view of the operator. The SS7/IP gateway 7 is connected to the SS7 network and as such is typically allocated a unique Point Code within the visibility area of the SS7 network, which Code provides a destination (and source) address for messages within the network. The physical connection between the Media Controllers 6 and the SS7/IP gateway 7 is provided by an IP network which may be the Internet but which is more probably an intranet having no public access.

Figure 2 illustrates the communication protocol layers implemented at the SS7/IP gateway 7 in order to allow ISUP messages carried by the SS7 signalling network to be relayed over the IP network to the Media Controllers 6, and *vice versa.* ISUP messages received at the SS7/IP gateway 7 from the access exchange 2 over the SS7 network are processed through a Message Transfer Part (MTP) layer 8 (see "Understanding Telecommunications", vols. 1 & 2, Studentlitteratur, Lund, Sweden (ISBN 91-44-00214-9)) before being passed to a processing and control part 9. Messages are relayed through this part 9 before being processed by a TCP/IP part 10 to provide IP datagrams suitable for transmission over the IP network to the Media Controllers 6. Messages received at the SS7/IP gateway 7 over the IP network are processed in the reverse direction, with the processing and control part 9 performing an additional message authentication operation as will now be described.

For the purpose of routing datagrams over the IP network between the SS7/gateway 7 and the Media Controllers 6 of the various ISPs 4, each Media Controller 6 is allocated an IP address (unique in that IP network). The IP address allocated to a Media Controller 6 is incorporated into all datagrams sent by that controller 6 to the SS7/IP gateway 7 and enables the SS7/IP gateway 7 to confirm the source of a received packet.

When a signalling message is received by the SS7/IP gateway 7, the processing and control part 9 identifies the IP address associated with the message. The gateway 7 maintains a record of the IP addresses allocated to the various Media Controllers 6 as well as a record of the circuits (CICs) allocated to each ISP. Each signalling message contains in its header part the CIC to which the message relates. The processing and control part 9 confirms that the originating ISP 4, identified from the source IP address, is allocated the CIC to which the signalling message relates. If the result is positive, the message is passed to the MTP 8 for relaying to the access exchange 2. If the result is negative, i.e. the signalling message relates to a CIC not allocated to the originating ISP 4, then the message is not relayed further and is discarded. In this event, an error message may be returned to the originating ISP 4 and also possibly to the access exchange 2.

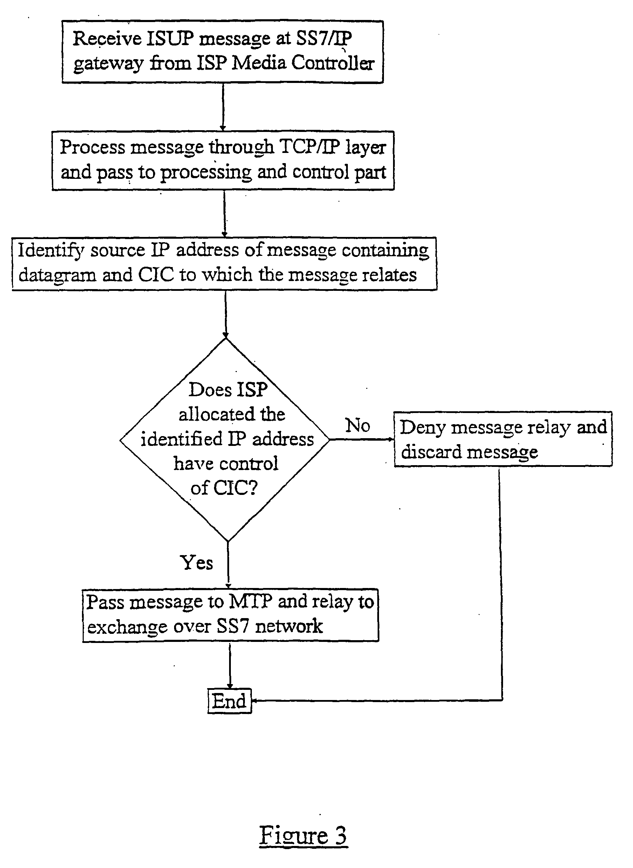

Figure 3 is a flow chart illustrating the message authentication and relay steps performed at the SS7/IP gateway 7 upon receipt of a signalling message from an ISP 4.

It will be appreciated that modifications may be made to the above described embodiment without departing from the scope of the present invention. For example, each Media Controller 6 may be allocated a Point Code in the SS7 network of the telecommunications network. Thus, a Media Controller 6 may be made the destination node for an SS7 message rather than the SS7/IP gateway (although signalling messages are still routed through the SS7/IP gateway). As the Point Code is included in the header of an ISUP message, the SS7/IP gateway 7 may authorise a received signalling message by matching the Point code included in the message header with the source IP address.

Whilst the embodiment described above includes only a single exchange 2 to which the subscriber telephone 1, the SS7/IP gateway 7, and the ISPs 4 are all directly connected, it will be appreciated that this need not be the case. Indeed, a more likely scenario involves a number of transit exchanges through which signalling data and circuit switched channels are routed. It will also be appreciated that the present invention is not limited to voice communications and is also applicable to general data communications.

The above description has also been concerned with the use of ISPs to connect subscribers to the Internet. The present invention may also be employed in connection with ISPs which connect subscribers to one or more closed intranets.

## Claims

1. A method of transferring signalling messages between an Internet Service Provider (ISP) (4) and an exchange (2) of a telecommunications network for the purpose of allocating and controlling circuit switched communication channels between the exchange and the ISP, the method comprising:
routing said signalling messages via a signalling gateway (7) which provides for conversion of messages between a first transmission protocol used in the telecommunications network and a second transmission protocol used in the network which connects the signalling gateway to the ISP; and
for each message received at the signalling gateway from the ISP, confirming the right of that ISP to control a circuit switched communication channel identified in the message.

2. A method according to claim 1 and comprising maintaining a record at the signalling gateway of the circuit switched communication channels allocated to each ISP coupled to the signalling gateway.

3. A method according to claim 1 or 2, wherein the telecommunication network comprises a Signalling System No.7 (SS7) based signalling network which is interfaced to the ISP via the signalling gateway.

4. A method according to any one of the preceding claims, wherein the network coupling the signalling gateway to the ISP is an IP based network.

5. A method according to claim 4 when appended to claim 3, wherein the signalling gateway provides a conversion between at least the Message Transfer Part protocols of the SS7 network and the IP based protocols enabling ISUP messages to be transferred, transparently, between the exchange and the ISP.

6. A method according to claim 4 or 5, wherein the ISP from which a signalling message originates is identified at the signalling gateway by virtue of the source IP address associated with the IP datagram in which the message is delivered to the gateway.

7. A method according to claim 3 or to any one of claims 4 to 6 when appended to claim 3, wherein each of the ISPs connected to a given signalling gateway is allocated a unique Point Code in the signalling network of the telecommunications network, Point Codes being included in the header of a signalling message to indicate the destination and source of the message, and the signalling gateway screens messages received from an ISP to confirm that the source Point Codes contained therein correspond to the actual ISPs from which they originated.

8. A method according to claim 3 or to any one of claims 4 to 6 when appended to claim 3, wherein the ISP from which a signalling message originates is identified by virtue of the input port/device of the signalling gateway at which the message arrives.

9. Apparatus for transferring signalling messages between an Internet Service Provider (ISP) (4) and an exchange (2) of a telecommunications network for the purpose of allocating and controlling circuit switched communication channels between the exchange and the ISP, the apparatus comprising a signalling gateway (7) coupled between a signalling network of a telecommunications network and a network connected to an Internet Service Provider (ISP) and arranged to:
convert messages between a first transmission protocol used in the telecommunications network and a second transmission protocol used in the network which connects the signalling gateway to the ISP; and
for each message received at the signalling gateway from the ISP, to confirm the right of that ISP to control a circuit switched communication channel identified in the message.

## Patentansprüche

1. Verfahren zum Übertragen von Signalisierungsnachrichten zwischen einem Internetdienstanbieter (Internet Service Provider, ISP) (4) und einer Vermittlungsstelle (2) eines Telekommunikationsnetzes zum Zwecke des Zuweisens und Steuerns von leitungsvermittelten Kommunikationskanälen zwischen der Vermittlungsstelle und dem ISP, wobei das Verfahren umfasst:
Routing der Signalisierungsnachrichten über ein Signalisierungs-Gateway (7), welches eine Umsetzung von Nachrichten zwischen einem ersten Übertragungsprotokoll, das in dem Telekommunikationsnetz verwendet wird, und einem zweiten Übertragungsprotokoll, das in dem Netz verwendet wird, welches das Signalisierungs-Gateway mit dem ISP verbindet, gewährleistet; und
für jede Nachricht, die an dem Signalisierungs-Gateway von dem ISP empfangen wurde, Bestätigen des Rechtes dieses ISP, einen leitungsvermittelten Kommunikationskanal zu steuern, der in der Nachricht angegeben ist.

2. Verfahren nach Anspruch 1, welches das Führen eines Verzeichnisses der leitungsvermittelten Kommunikationskanäle, die den einzelnen mit dem Signalisierungs-Gateway verbundenen ISPs zugewiesen wurden, an dem Signalisierungs-Gateway umfasst.

3. Verfahren nach Anspruch 1 oder 2, wobei das Telekommunikationsnetz ein auf dem Signalisierungssystem Nr. 7 (Signalling System No. 7, SS7) basierendes Signalisierungsnetz umfasst, welches mit dem ISP über das Signalisierungs-Gateway gekoppelt ist.

4. Verfahren nach einem der vorhergehenden Ansprüche, wobei das Netz, welches das Signalisierungs-Gateway mit dem ISP verbindet, ein IP-basiertes Netz ist.

5. Verfahren nach Anspruch 4, wenn dieser in Verbindung mit Anspruch 3 steht, wobei das Signalisierungs-Gateway eine Umsetzung zwischen wenigstens den Protokollen des Nachrichtenübertragungsteils (Message Transfer Part) des SS7-Netzes und den IP-basierten Protokollen gewährleistet, wodurch ermöglicht wird, dass ISUP-Nachrichten transparent zwischen der Vermittlungsstelle und dem ISP übertragen werden.

6. Verfahren nach Anspruch 4 oder 5, der ISP, von welchem eine Signalisierungsnachricht stammt, an dem Signalisierungs-Gateway aufgrund der Quell-IP-Adresse identifiziert wird, die mit dem IP-Datagramm verknüpft ist, in welchem die Nachricht dem Gateway übermittelt wird.

7. Verfahren nach Anspruch 3 oder irgendeinen der Ansprüche 4 bis 6, wenn dieser Anspruch in Verbindung mit Anspruch 3 steht, wobei jedem der ISPs, die mit einem gegebenen Signalisierungs-Gateway verbunden sind, ein eindeutiger Point Code (Punktcode) in dem Signalisierungsnetz des Telekommunikationsnetzes zugewiesen ist, wobei Point Codes in dem Nachrichtenkopf einer Signalisierungsnachricht enthalten sind, um das Ziel und die Quelle der Nachricht anzugeben, und das Signalisierungs-Gateway Nachrichten filtert, die von einem ISP empfangen wurden, um zu bestätigen, dass die darin enthaltenen Point Codes der Quelle den tatsächlichen ISPs entsprechen, von welchen sie stammen.

8. Verfahren nach Anspruch 3 oder irgendeinen der Ansprüche 4 bis 6, wenn dieser Anspruch in Verbindung mit Anspruch 3 steht, wobei der ISP, von welchem eine Signalisierungsnachricht stammt, anhand des Eingangsports/der Eingangseinrichtung des Signalisierungs-Gateways identifiziert wird, an welcher die Nachricht ankommt.

9. Vorrichtung zum Übertragen von Signalisierungsnachrichten zwischen einem Internetdienstanbieter (ISP) (4) und einer Vermittlungsstelle (2) eines Telekommunikationsnetzes zum Zwecke des Zuweisens und Steuerns von leitungsvermittelten Kommunikationskanälen zwischen der Vermittlungsstelle und dem ISP, wobei die Vorrichtung ein Signalisierungs-Gateway (7) umfasst, das zwischen ein Signalisierungsnetz eines Telekommunikationsnetzes und ein Netz, das mit einem Internetdienstanbieter (ISP) verbunden ist, geschaltet ist und dazu vorgesehen ist:
Nachrichten zwischen einem ersten Übertragungsprotokoll, das in dem Telekommunikationsnetz verwendet wird, und einem zweiten Übertragungsprotokoll, das in dem Netz verwendet wird, welches das Signalisierungs-Gateway mit dem ISP verbindet, umzusetzen; und
für jede Nachricht, die an dem Signalisierungs-Gateway von dem ISP empfangen wurde, das Recht dieses ISP zu bestätigen, einen leitungsvermittelten Kommunikationskanal zu steuern, der in der Nachricht angegeben ist.

## Revendications

1. Procédé pour transférer des messages de signalisation entre un fournisseur de services Internet (ISP) 4 et un central (2) d'un réseau de télécommunication dans le but d'allouer et commander des canaux de communication à commutation de circuits entre le central et l'ISP, le procédé comprenant les étapes consistant à :
router lesdits messages de signalisation via une passerelle de signalisation (7) qui fournit une conversion de messages d'un premier protocole de transmission utilisé dans le réseau de télécommunication à un second protocole de transmission utilisé dans le réseau qui connecte la passerelle de signalisation à l'ISP ; et
pour chaque message reçu au niveau de la passerelle de signalisation en provenance de l'ISP, confirmer le droit de cet ISP à commander un canal de communication à commutation de circuits identifié dans le message.

2. Procédé selon la revendication 1 et comprenant l'étape consistant à conserver un enregistrement au niveau de la passerelle de signalisation des canaux de communication à commutation de circuits alloués à chaque ISP couplé à la passerelle de signalisation.

3. Procédé selon la revendication 1 ou 2, dans lequel le réseau de télécommunication comprend un réseau de signalisation basé sur le système de signalisation No.7 (SS7) qui est en interface avec l' ISP via la passerelle de signalisation.

4. Procédé selon une quelconque des revendications précédentes, dans lequel le réseau couplant la passerelle de signalisation à l'ISP est un réseau basé sur IP.

5. Procédé selon la revendication 4 lorsque annexée à la revendication 3, dans lequel la passerelle de signalisation fournit une conversion d'au moins les protocoles de sous-système Transfert de Messages du réseau SS7 aux protocoles basés sur IP en permettant de transférer des messages ISUP, de manière transparente, entre le central et l'ISP.

6. Procédé selon la revendication 4 ou 5, dans lequel l'ISP duquel émane un message de signalisation est identifié au niveau de la passerelle de signalisation au moyen de l'adresse IP source associée au datagramme IP dans lequel le message est remis à la passerelle.

7. Procédé selon la revendication 3 ou une quelconque des revendications 4 à 6 lorsque annexées à la revendication 3, dans lequel chacun des ISPs connecté à une passerelle de signalisation donnée se voit allouer un code de point unique dans le réseau de signalisation du réseau de télécommunication, les codes de point étant inclus dans l'en-tête d'un message de signalisation afin d'indiquer la destination et la source du message et la passerelle de signalisation filtre les messages reçus en provenance de l'ISP afin de confirmer que les codes de point source contenus dans ceux-ci correspondent aux ISPs effectifs desquels ils émanent.

8. Procédé selon la revendication 3 ou une quelconque des revendications 4 à 6 lorsque annexées à la revendication 3, dans lequel l'ISP duquel émane un message de signalisation est identifié au moyen du dispositif/port d'entrée de la passerelle de signalisation à laquelle arrive le message.

9. Appareil pour transférer des messages de signalisation entre un fournisseur de services Internet (ISP) 4 et un central (2) d'un réseau de télécommunication dans le but d'allouer et commander des canaux de communication à commutation de circuits entre le central et l'ISP, l'appareil comprenant une passerelle de signalisation (7) couplée entre un réseau de signalisation d'un réseau de télécommunication et un réseau connecté à un fournisseur de services Internet (ISP) et agencée afin de :
convertir des messages d'un premier protocole de transmission utilisé dans le réseau de télécommunication à un second protocole de transmission utilisé dans le réseau qui connecte la passerelle de signalisation à l'ISP ; et
pour chaque message reçu au niveau de la passerelle de signalisation en provenance de l'ISP, confirmer le droit de cet ISP à commander un canal de communication à commutation de circuits identifié dans le message.
